# EUROPEAN PATENT SPECIFICATION

(11) **EP 4 022 291 B1**
(45) Date of publication and mention of the grant of the patent: **18.11.2026**
(21) Application number: 20761009.8
(22) Date of filing: 06.08.2020
(51) Int. Cl.: G01N 21/956

(54) **SYSTEMS AND METHODS FOR HONEYCOMB BODY INSPECTION**
SYSTEME UND VERFAHREN ZUR INSPEKTION VON WABENKÖRPERN
SYSTÈMES ET PROCÉDÉS D'INSPECTION DE CORPS EN NID D'ABEILLES

(30) Priority: 30.08.2019 US 201962893906 P
(43) Date of publication of application: 06.07.2022
(73) Proprietor: Corning Incorporated, Corning, New York 14831 (US)
(72) Inventor: BARNES, Joshua Andrew, Horseheads, New York 14845 (US); MADARA, Russell Wayne, Corning, New York 14830 (US); O'LOUGHLIN JR., Robert Joseph, Big Flats, New York 14814 (US); SUBER, Christie James, Painted Post, New York 14870 (US); TREACY, Eric Daniel, Beaver Dams, New York 14812 (US); WASHBURN, Paul Edward, Newport, Virginia 24128 (US); WU, Michael Yen-Ting, Cambridge, Massachusetts 02140 (US); ZOU, Xiaotian, Painted Post, New York 14870 (US)
(74) Representative: Sturm, Christoph
(86) International application number: PCT/US2020/045112
(87) International publication number: WO 2021/040986

(56) References cited:
- EP-A1- 1 760 426
- EP-A1- 2 128 816
- EP-A2- 2 568 279
- DE-U1- 202015 000 233
- JP-A- 2000 009 451
- JP-A- 2008 185 438
- JP-A- 2013 024 560
- JP-A- H08 285 780
- JP-A- S58 155 343
- US-A1- 2010 274 525
- US-A1- 2011 128 370
- US-A1- 2017 365 050

## Description

### CROSS REFERENCE TO RELATED APPLICATION

This application claims the benefit of priority under 35 U.S.C §120 of U.S. Provisional Application Serial No. 62/893,906 filed on August 30, 2019.

### BACKGROUND

Honeycomb bodies are used in a variety of applications, such as the construction of particulate filters and catalytic converters that treat unwanted components in a working fluid, such as pollutants in a combustion exhaust. The manufacture of honeycomb bodies may include inspection for the presence of surface defects that might be present and that could adversely impact performance of the honeycomb body.

US 2017/364050 A1 discloses an inspection method for a surface of a ceramic body capable of determining cracks. EP 1 760 426 A1discloses a device for imaging the surface of a rotating cylinder, such as a gravure or printing cylinder, for defect inspection or registration checking. The device supports and rotates the cylinder using rollers that contact the cylinder from below at both ends, and a camera (preferably a CCD line sensor) images the cylinder surface. The imaging is synchronized with the rotation speed using a drive controller, ensuring high-resolution images regardless of cylinder diameter.

### SUMMARY

Various approaches are described herein for, among other things, providing improved imaging and inspection of a honeycomb body. For instance, an apparatus for inspecting a honeycomb body can be configured to provide precise imaging of the entire outer surface of a honeycomb body. The inspection apparatus can be configured to form a composite image based on multiple collected images. The instruction to take each image can be triggered by circumferential travel of a honeycomb body.

The invention is set out in the appended set of claims.

An angle between an illumination axis of the light source and an optical axis of the camera is less than or equal to 15°. In some embodiments, the light source comprises a plurality of light sources and the angle between the illumination axis of each of the plurality of light sources and the optical axis of the camera is less than or equal to 15°. In some embodiments, the plurality of light sources has a combined intensity of at least two million lux.

In some embodiments, the camera has a depth of field that is centered on the outer circumferential surface of the honeycomb body so that the depth of field extends approximately 5 mm outward and 5 mm inward from the outer circumferential surface of the honeycomb body at a center of the inspection region.

The light source has an intensity of at least one million lux.

In some embodiments, the camera comprises a plurality of cameras. In some embodiments, the plurality of cameras is distributed around the circumference of the honeycomb body, the field of view of each of the cameras comprises a length measured parallel to the axis of rotation that is greater than or equal to a full length of the honeycomb body. In some embodiments, the plurality of cameras is distributed parallel to the axis of rotation, the plurality of cameras having a combined field of view having a combined length measured parallel to the axis of rotation that is greater than or equal to a full length of the honeycomb body.

In some embodiments, the field of view comprises a length measured parallel to the axis of rotation that is greater than or equal to a full length of the honeycomb body measured parallel to the axis of rotation. In some embodiments, the apparatus further comprises a distance sensor configured to determine a distance between the camera and the honeycomb body in a direction parallel to an optical axis of the camera.

In some embodiments, the apparatus further comprises a loading mechanism configured to place the honeycomb body on the actuator.

In some embodiments, the apparatus further comprises a control unit configured to analyze the image to identify one or more surface defects.

In some embodiments, the apparatus further comprises a rejection actuator configured to move the honeycomb body to a rejection receptacle based at least in part on a number of identified surface defects being greater than or equal to a predefined threshold.

In some embodiments, the apparatus further comprises a marking device configured to apply an indicium to a surface of the honeycomb body based at least in part on a number of identified surface defects being less than a predefined threshold. In some embodiments, wherein the indicium indicates that the honeycomb body has passed inspection.

In some embodiments, the actuator is spaced from a portion of an intersection between an end face of the honeycomb body and the outer circumferential surface of the honeycomb body in the inspection region.

In some embodiments, the actuator comprises a pair of rollers configured to receive the honeycomb body, wherein rotation of at least one of the rollers causes rotation of the honeycomb body due to frictional engagement between the outer circumferential surface of the honeycomb body and the at least one roller.

In some embodiments, the sensor measures circumferential travel along a circumference of the honeycomb body when the honeycomb body is rotated by the actuator, and the predetermined interval comprises an increment of circumferential travel.

In some embodiments, an angle between an illumination axis of the first light source and an optical axis of the camera is less than or equal to 15°, and an angle between an illumination axis of the second light source and the optical axis of the camera is less than or equal to 15°.

**In** some embodiments, the first light source has an intensity of at least one million lux, and the second light source has an intensity of at least one million lux.

**In** some embodiments, the method further comprises rejecting the honeycomb body based at least in part on a number of identified surface defects being greater than or equal to a predefined threshold.

**In** some embodiments, the method further comprises applying an indicium to a surface of the honeycomb body based at least in part on a number of identified surface defects being less than a predefined threshold.

**In** some embodiments, the actuator comprises a pair of rollers configured to receive the honeycomb body, wherein continuously rotating honeycomb body comprises rotating at least one of the rollers to rotate the honeycomb body about a longitudinal axis of the honeycomb body due to frictional engagement between the outer circumferential surface of the honeycomb body and the at least one roller.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Moreover, it is noted that the invention is not limited to the specific embodiments described in the Detailed Description and/or other sections of this document. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form part of the specification, illustrate embodiments of the present invention and, together with the description, further serve to explain the principles involved and to enable a person skilled in the relevant art(s) to make and use the disclosed technologies.
FIG. 1 is a perspective view of an exemplary honeycomb body.
FIG. 2 is a side view of the honeycomb body of FIG. 1.
FIG. 3 is a front view of an example apparatus to inspect a honeycomb body in accordance with an embodiment.
FIG. 4 is a side view of a portion of the example apparatus of FIG. 3.
FIG. 5 is a perspective view of a portion of the example apparatus of FIG. 3.
FIG. 6 is a side schematic view of an outer surface of honeycomb body including an inspection region.
FIG. 7 is a front view of an example apparatus to inspect a honeycomb body in accordance with an embodiment.
FIG. 8 is a side view of a portion of an example apparatus to inspect a honeycomb body in accordance with an embodiment.
FIG. 9 is a perspective view of a honeycomb body including defects.
FIG. 10 is a perspective schematic view of the honeycomb body of FIG. 9.
FIG. 11 is a top view of a composite image of the outer surface of the honeycomb body of FIG. 9.
FIG. 12 depicts a flowchart of an example method of inspecting an outer surface of a honeycomb body in accordance with an embodiment.

The features and advantages of the disclosed technologies will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

The following detailed description refers to the accompanying drawings that illustrate embodiments of the present disclosure. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment," "an embodiment," "an example," or the like, indicate that the embodiment described may include a particular feature, structure or characteristic, but every embodiment may not necessarily include the particular feature, structure, or characteristic. Moreover, such phrases are not necessarily referring to the same embodiment. Furthermore, when a particular feature, structure, or characteristic is described in connection with an embodiment, it is submitted that it is within the knowledge of one skilled in the relevant art(s) to implement such feature, structure, or characteristic in connection with other embodiments whether or not explicitly described.

Embodiments described herein provide improvements over known inspection systems utilized for inspecting the outer surface of a honeycomb body. Advantages of the embodiments described herein include simplified loading that does not require the parts to be precisely located on an actuator, resulting in reduced labor costs. The disclosed embodiments avoid distorted or incomplete images based on variations in rotational speed. The embodiments provide high precision imaging based on direct measurement of circumferential travel of a honeycomb body. A further advantage is that the embodiments described herein allow surface anomalies on a honeycomb body to be characterized and sized to enable a determination of whether any anomalies are present, and if so, whether any such anomaly is a defect that requires repair or rejection of the honeycomb body. The embodiments also enable magnified images to be collected for quality control and process monitoring.

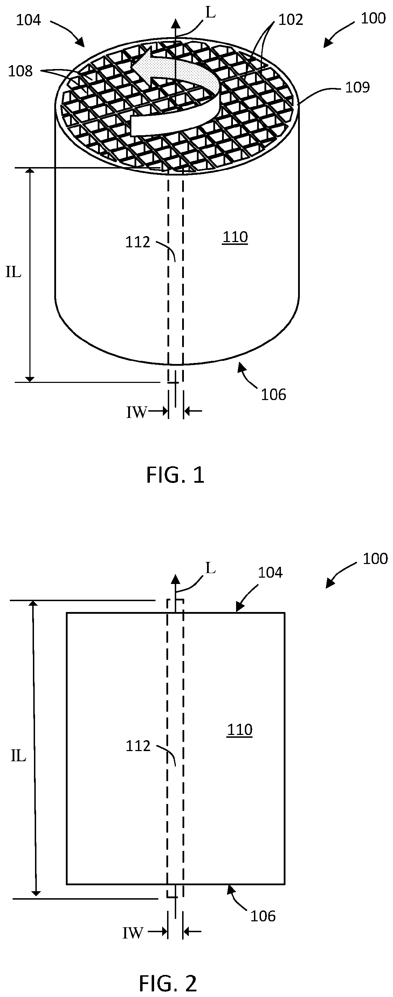

FIGS. 1 and 2 illustrate an exemplary honeycomb body 100. The honeycomb body 100 is generally formed from an extruded ceramic material. The honeycomb body 100 comprises a plurality of intersecting inner walls 102 extending longitudinally through the honeycomb body 100, substantially parallel to a longitudinal axis L, from a first end 104 to a second end 106. The inner walls 102 combine to define a plurality of channels, or cells 108, that form bores, or lumens, extending through the honeycomb body 100 from the first end 104 to the second end 106 and form the cellular honeycomb construction of the honeycomb body 100. The honeycomb body 100 can be constructed from porous ceramic materials.

An outer skin 109 surrounds the inner walls 102 and defines an outer eral surface 110 of the honeycomb body 100. The outer surface 110 refers to the circumferential surface extends longitudinally between opposite ends 104, 106 of the honeycomb body 100. For ease of discussion herein, the term circumferential (and/or circumference) is used, however, the honeycomb body 100 can take shapes other than cylindrical and the circumferential surface is intended to refer to the outer peripheral surface of any such shape. The outer skin 109 forms and defines the outer shape of the honeycomb body 100. The systems and methods disclosed herein are arranged to detect whether any anomalies are present in and/or on the outer skin 109. If an anomaly is detected, some of these anomalies may be merely aesthetic while others may be defects that cause the honeycomb body to fail inspection, e.g., necessitate the repair or rejection of the honeycomb body 100. The embodiments described herein are capable of determining when an anomaly constitutes such a defect. Examples of aesthetic anomalies include but are not limited to side stick, loose fibers, tube gauge marks, and corrugation. Examples of defects (which may require repair or rejection) include but are not limited to macro/micro full fissures, macro/micro partial fissures, oil fissures, raised fissures, air checks, and edge chips.

Methods and apparatuses for inspecting a honeycomb body are described herein. Such an inspection apparatus can be configured to provide a composite image of the entire outer surface 110 to provide repeatable full inspection coverage of the outer surface 110. For example, the inspection apparatus can be configured to capture a series of images corresponding to an inspection region 112 that extends over the entire length of the honeycomb body 100 and a predefined portion of the circumference of the honeycomb body 100. The images of the inspection region are combined to form a composite image showing the entire outer surface 110.

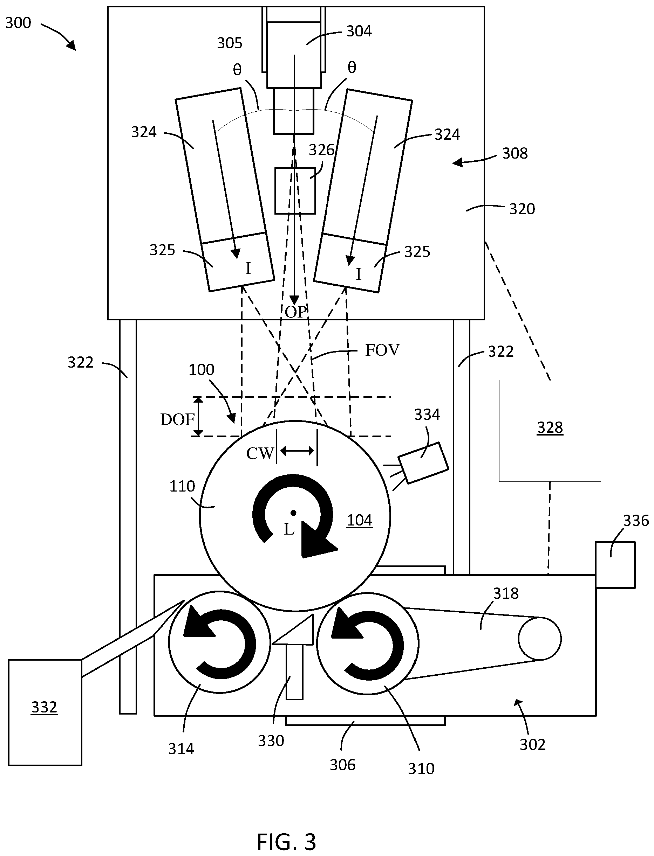

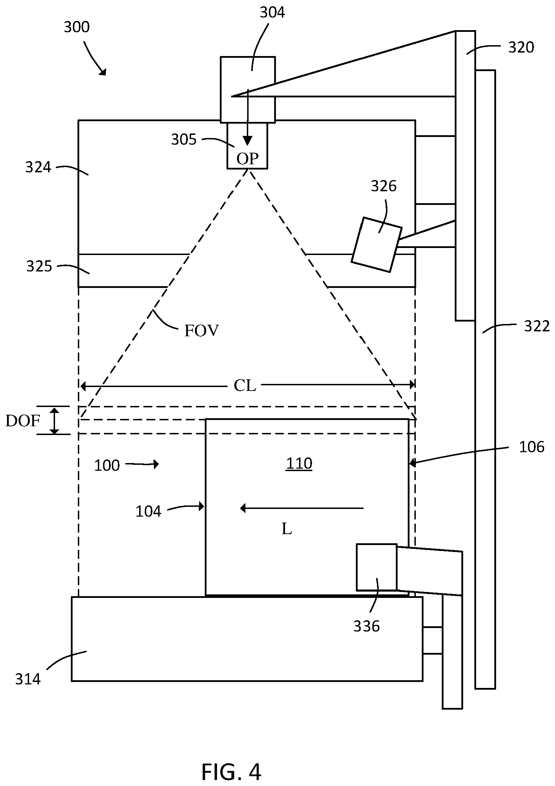

Referring to FIGS. 3-5, an example apparatus 300 to inspect a honeycomb body 100 will be described. Apparatus 300 comprises an actuator 302, a camera 304, a sensor 306, and a light source assembly 308. The actuator 302 supports the honeycomb body 100 during inspection and is configured to rotate the honeycomb body 100. In an embodiment, the actuator 302 is configured to rotate the honeycomb body 100 continuously over at least a full rotation of the honeycomb body 100 about a longitudinal axis L. In an embodiment, actuator 302 comprises at least one drive roller 310 that is driven by a motor 512, and that forces the honeycomb body 100 to rotate. The drive roller 310 contacts the outer surface 110 of honeycomb body 100 and can be at least partially constructed of a material that creates friction between the drive roller 310 and the outer surface 110. In this way, rotation of the drive roller 310 results in rotation of the honeycomb body 100 when the surface 110 of the honeycomb body 100 is engaged against the drive roller 310. The drive roller 310 can comprise a relatively soft material to cushion the honeycomb body 100. For instance, the material can be polyurethane.

In an embodiment, the actuator 302 also comprises a second roller 314, e.g., that is freely rotatable. The second roller 314 combines with the drive roller 310 to form a support for the honeycomb body 100. For instance, the second roller 314 and the drive roller 310 can support the honeycomb body 100 when the honeycomb body 100 is received in a gap 315 formed between the drive roller 310 and the second roller 31. The honeycomb body 100 can be supported in a horizontal orientation, though the honeycomb body 100 can be supported in any suitable orientation. The second roller 314 is configured to rotate with the rotation of the honeycomb body 100, which is forced to rotate by drive roller 310. In an embodiment, drive roller 310 and second roller 314 are disposed on a side of the honeycomb body 100 that is opposite the inspection region 112 so that the rollers 310 and 314 are spaced from a perimeter of the inspection region 112. That spacing ensures that the rollers 310 and 314 do not interfere with a field of view of the camera 304 or the illumination provided by the light source assembly 308, such as by creating reflections off of the actuator 302. An advantage provided by the roller system of actuator 302 is that precise alignment between the longitudinal axis L of the honeycomb body 100 and the rotational axis of the actuator is not required. Instead, the honeycomb body 100 will rotate about the longitudinal axis L (e.g., the central axis of the honeycomb body 100 when the honeycomb body is cylindrical) when engaged with the rollers 310, 314. Additionally, since the outer surface 110 engages with the rollers 310, 314, the honeycomb body 100 can advantageously be loaded onto the rollers 310, 314 without the need to contact or engage the ends 104, 106, which are generally more susceptible to damage than the outer skin 109.

The honeycomb body 100 can be loaded onto the actuator 302 manually or automatically. For example, an operator can manually load the honeycomb body 100 onto the actuator 302. In another example, the apparatus comprises a loading mechanism, such as a robot, that is configured to place the honeycomb body 100 onto the actuator 302.

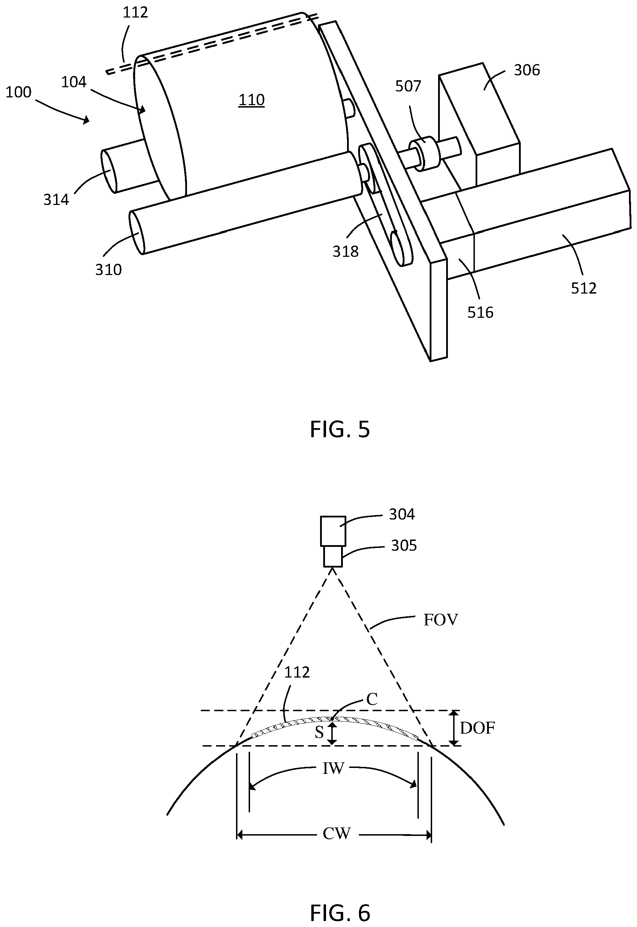

As shown in FIG. 5, a motor 512 is coupled to the drive roller 310 to enable rotation of the drive roller 310 via the motor 512. In an embodiment, motor 512 is coupled to the driver roller 310 via a gearbox 516. The gear box 516 can be coupled to a drive mechanism 318, such as a belt or chain drive. As alternatives, motor 512 or gearbox 516 can be directly coupled to drive roller 310. Motor 512 can be a servo motor, but other motors can be used, such as an electric motor or a pneumatic motor. In an embodiment, the rotational speed of the motor 512 is set so that the outer surface 110 of the honeycomb body 100 travels at a speed of at least 125 mm/s, in an embodiment at least 150 mm/s, and in an embodiment at least 250 mm/s.

The camera 304 is arranged relative to the honeycomb body 100 so that the camera 304 defines a field of view FOV and depth of field DOF that encompass the desired inspection region 112 of the outer surface 110 of the honeycomb body 100. For example, the field of view FOV can be sized to have a length dimension CL that is greater than or equal to a length dimension IL of the inspection region 112 in a direction parallel to the axis of rotation (e.g., longitudinal axis L), of the honeycomb body 100 so that the camera 304 is configured to image the entire length of the honeycomb body 100. In an embodiment, the field of view FOV length dimension CL is at least about 3%, about 5%, or even about 10% longer than the length dimension IL of inspection region 112 and/or of the full length of the honeycomb body between the ends 104, 106. Additionally, the field of view FOV is sized to have a width dimension CW that encompasses a width dimension IW that is an arc length of the inspection region 112, so that the camera 304 is configured to image a predefined length of the circumference of the honeycomb body 100. In an embodiment the width dimension IW of the inspection region 112 is in a range of 2-20 µm, in a further embodiment in a range of 5-15 µm, and in a further embodiment about 10 µm.

Additionally, the camera 304 is selected so that the depth of field DOF allows the entire portion of the outer surface 110 encompassed by the inspection region 112 to be in focus. For example, the outer surface 110 is curved generally about the longitudinal axis L of the honeycomb body 100. As a result, portions of the outer surface 110 within the inspection region 112 are at different distances from the camera 304, when measured parallel to optical axis OP of the camera 304. The difference between the minimum distance to the camera and the maximum distance to the camera of the outer surface 110 in the inspection region 112 defines a segment depth S, shown in FIG. 6, and the depth of field DOF of the camera is greater than or equal to the segment depth S. In an embodiment, an inspection apparatus can be configured to inspect a honeycomb body 100 having a diameter of about 6.0" by providing a camera configured to image an inspection region 112 having a length dimension IL of about 6.2", and a width dimension IW of about 10 µm, within a depth of field of 10 mm (i.e., +/- 5 mm from the outer surface 110).

The camera 304 can be coupled to a lens 305 to provide magnification and/or to alter the field of view FOV of the camera 304. In an embodiment, the lens is a telecentric lens. In an embodiment, the lens is a macro lens. In an embodiment, the lens provides magnification in a range of x0.05-x2.0. In an embodiment, the lens provides x0.35 magnification.

Still further, the camera 304 is selected to provide a data transfer rate that supports an inspection cycle time that is significantly less than 60 seconds. In an embodiment, the data transfer rate is fast enough to capture images of the entire outer surface 110 of the honeycomb body 100 and transfer the captured images to storage in less than 20 seconds. In an embodiment, the cycle time is less than about 5 seconds, less than about 2 seconds, or more preferably less than about 1.5 seconds. In an embodiment, the camera 304 is a line scan camera. In one embodiment, the camera 304 is constructed from a linear array of 10k-20k pixels having 0.5µm-7.5µm resolution, and in an embodiment a linear array of 16k pixels having 3.5 µm pixel resolution.

The inspection apparatus 300 can also comprise a movable fixture that is configured to provide relative movement between the camera 304 and the honeycomb body 100 in the direction parallel to the optical axis OP of the camera. For example, the movable fixture can be a translation slide mechanism that comprises a camera mount 320 and at least one slide rail 322. The camera mount 320 is movably coupled to the slide rail 322 so that the camera mount 320 can be translated. The slide rail 322 can be fixed relative to the honeycomb body 100. The camera 304 can be fixedly coupled to the camera mount 320 in an orientation that allows the camera 304 to be translated relative to the slide rail 322 and the honeycomb body 100 in a direction parallel to the optical axis OP of the camera 304. In an embodiment, the slide rail 322 is oriented vertically so that the camera 304 is translatable in a vertical axis toward and away from the honeycomb body 100. In an embodiment, the camera 304 is positioned so that a center of the depth of field DOF is located approximately on a nominal diameter of the honeycomb body 100 being inspected, for example so that the depth of field defines a focused region that extends 5 mm outward and 5 mm inward from the nominal outer diameter of the honeycomb body 100 at the center C of the width dimension IW of the inspection region 112 (i.e., +/- 5 mm).

Sensor 306 is comprised by inspection apparatus 300 and is configured to measure circumferential travel of the honeycomb body 100 as it is rotated by the drive roller 310 of the actuator 302. The sensor 306 is employed to trigger the camera 304 to collect images of the inspection region 112 of the honeycomb body 100 as it is rotated, i.e., to send a signal instructing or otherwise activating the camera 304. Because circumferential travel is used to trigger the camera 304 to collect images, variations of rotational speed of the honeycomb body 100 advantageously do not affect the composite image, and no portions of the outer surface 110 are inadvertently missed during imaging. For example, the sensor 306 is configured to trigger the camera 304 to collect an image of the inspection region 112 at a predetermined increment of circumferential travel of outer surface 110 of honeycomb body 100. In an embodiment, sensor 306 is coupled to drive roller 310. The drive roller 310 directly contacts the outer surface 110 of the honeycomb body 100, so the circumferential travel of drive roller 310 is the same as the circumferential travel of the outer surface 110 during rotation. In an embodiment, the sensor 306 is an encoder that is coupled to drive roller 310, but the sensor 306 can include contact or non-contact travel measuring devices. The sensor 306 can be coupled to the drive roller 310 using a flexible rotating coupling 507 so that the roller 310 and/or sensor 306 do not bind or damage each other during rotation. In an embodiment, the sensor 306 is an encoder having a measurement resolution of less than 0.5 µm, in an embodiment less than 0.2 µm, and in an embodiment less than 0.1 µm. In an embodiment, the sensor 306 triggers the camera 304 to collect an image at each increment of 10 µm of circumferential travel of the outer surface 110 as the honeycomb body 100 rotates continuously.

Light source assembly 308 is configured to emit light and to direct the light onto the outer surface 110 of the honeycomb body 100. The emitted light forms an illumination area on the outer surface 110 that encompasses the inspection region 112 so that the inspection region 112 is illuminated during image capture by camera 304. Light source assembly 308 comprises at least one light source 324 that defines an illumination axis I, and can comprise a plurality of light sources 324. The light sources 324 can be high intensity monochromatic LED light sources, such as a light source 324 constructed from an array of LED light sources. The light emitted by the light source 324 is defined by at least one wavelength, and the wavelength can be selected to match the material of the honeycomb body 100 to provide desired image quality. In an embodiment, the light source assembly 308 is configured to emit white light, and in another embodiment the light source assembly 308 is configured to emit red light. Each light source 324 can also comprise a lens 325 that can provide a very highly focused and narrow illumination area, such as line-illumination of a portion of the honeycomb body 100. In an embodiment, the light source is configured to provide an illumination area having a length of at least 200 mm.

In the illustrated embodiment, light source assembly 308 comprises a pair of light sources 324, each defining an illumination axis I. In embodiments that include a plurality of light sources 324, each of the light sources 324 can be a focused high intensity light source configured to form an illumination area on the outer surface 110 that encompasses the inspection region, so that the illumination areas of the plurality of light sources 324 overlap. In an embodiment, the light source 324 is oriented to define an illumination angle θ between the illumination axis I and the optical axis OP of the camera. In an embodiment, the illumination angle θ is as close as possible to 0° so the visibility of some surface anomalies, such as corrugation, is reduced. In an embodiment, the illumination angle θ is less than or equal to 15°, less than or equal to 12°, or even less than or equal to 10°. In an embodiment, a pair of light sources is included, and the light sources are disposed on opposite sides of the optical axis OP of the camera 304 and provide illumination angles of +θ and -θ. The light source assembly 308 can be configured to emit high intensity light, such as having a total intensity of at least one million lux, and in an embodiment at least two million lux. For example, a plurality of light sources can be included having a combined intensity of two million lux.

The inspection apparatus 300 can also comprise a distance sensor 326 that provides information related to the distance between the camera 304 and the honeycomb body 100. Distance sensor 326 is configured to determine a distance between the camera 304 and the honeycomb body 100 in a direction parallel to the optical axis OP of the camera 304. In an embodiment, distance sensor 326 is coupled to the camera mount 320 so that the distance sensor 326 is movable with the camera 304. The measurement information provided by the distance sensor 326 can be used after the honeycomb body 100 is loaded on the actuator 302 to position the camera 304 relative to the honeycomb body 100, so that the depth of field DOF provided by the camera 304 encompasses the inspection region 112 on the honeycomb body 100. The distance sensor can be a laser-based system, such as a laser proximity sensor, that directs a laser toward the outer surface 110 of the honeycomb body 100, senses a reflection of the laser, and converts that information into distance data.

In some embodiments, the inspection apparatus 300 comprises a control unit 328. The control unit 328 can be configured to analyze images of the outer surface 110 of honeycomb body 100, to identify one or more surface defects by determining if an anomaly should be classified as a defect, and to output results of the analysis. For example, the control unit 328 can sequentially stitch together the images of the inspection region taken by the camera 304 as the honeycomb body 100 rotates to form a composite image. The composite image shows the entire outer surface 110 including surface anomalies that may be defects. The control unit 328 analyzes the anomalies, such as by collecting measurement information and/or by classifying the anomaly into types by shape or another characteristic, to determine whether the anomalies are defects. The control unit 328 can also be configured to count the defects and to determine whether the number of defects exceeds a predefined threshold of number of defects. In an embodiment, the threshold number of defects is 10. In another embodiment, the threshold number of defects is 5, or 3, or even 1. As an example, the determination from the control unit 328 can be used to sort or mark a honeycomb body 100.

In an embodiment, the apparatus 300 comprises a rejection actuator 330 used to sort the inspected honeycomb bodies. In an embodiment, the rejection actuator 330 is arranged as a movable wedge that selectively extends and contacts a portion of the honeycomb body 100. In one example, the rejection actuator 330 is disposed between drive roller 310 and second roller 314 below the honeycomb body 100. In another example, the rejection actuator 330 is disposed on a side of the honeycomb body 100. Movement of the rejection actuator 330 can be based at least in part on the number of identified defects determined by the control unit 328. For example, the honeycomb body 100 can be rejected if the honeycomb body 100 comprises a number of surface defects that is greater than or equal to a threshold, such as ten, five, or even one surface defects. If a honeycomb body 100 is determined to include enough defects to be rejected, the rejection actuator 330 is translated toward the honeycomb body 100 and the actuator 330 (e.g., the wedge shaped body) causes the honeycomb body 100 to be ejected from actuator 302 and into a rejection receptacle 332 that is disposed adjacent the actuator 302.

In an embodiment, the apparatus 300 comprises a marking device 334. The marking device 334 is configured to apply at least one indicium to a surface of the honeycomb body 100, such as by spraying ink onto the outer surface 110 of the honeycomb body 100. The marking device 334 can be operated to indicate passing and/or failing inspection by the honeycomb body 100, such as by writing "pass," "good," "fail", or "reject" and/or by marking a symbol (e.g., check mark, X, circle, or other shape, icon, letter, color, symbol, or combinations thereof) on a surface of the honeycomb body 100. Operation of the marking device 334 can be based at least in part on the number of identified defects determined by the control unit 328. For example, the honeycomb body 100 can be passed or rejected based on a threshold as described above, and the honeycomb body 100 can be marked accordingly. In an example, the honeycomb body 100 is marked as passing inspection (e.g., by applying "pass" or "good" on the outer surface 110) using the marking device 334 if a number of identified surface defects is less than the threshold.

A part presence sensor 336 can be comprised by apparatus 300 to identify when a honeycomb body 100 is disposed on actuator 302 and can be used to initiate inspection of the honeycomb body 100. The part presence sensor 336 can be fixed on a portion of actuator 302 and can be directed to a location adjacent driver roller 310 that is occupied by a loaded honeycomb body 100. The part presence sensor 336 can be a laser presence sensor. In an embodiment, the presence of the honeycomb body 100 can be determined by distance sensor 326 instead of the part presence sensor 336.

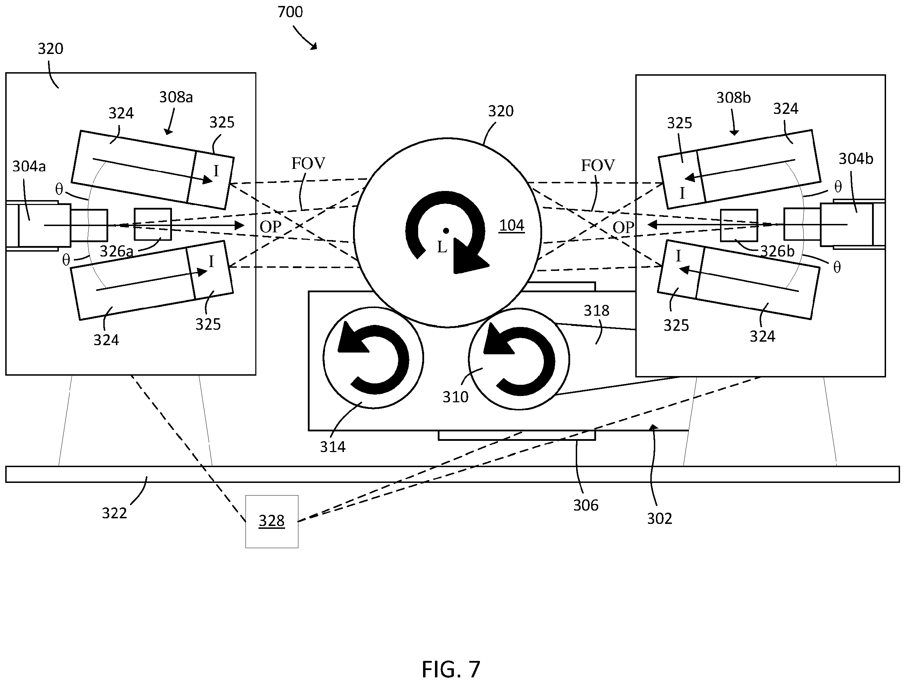

Referring now to FIG. 7, another example apparatus 700 to inspect a honeycomb body 100 will be described. Apparatus 700 provides a configuration that can reduce the amount of time to perform an inspection of the entire outer surface 110 of the honeycomb body 100 by a plurality of cameras distributed around the circumference of the honeycomb body 100. Apparatus 700 comprises actuator 302, a first camera 304a, a second camera 304b, sensor 306, a first light source assembly 308a, and a second light source assembly 308b. Apparatus 100 can also comprise control unit 328, a first distance sensor 326a, and a second distance sensor 326b. For ease of discussion herein, any component having a base reference numeral appended by an alphabetic suffix (e.g., 'a', 'b', etc.) generally shares the description of that component identified with the base numeral without suffix. For example, the structure and operation of the distance sensors 326a and 326b is understood from the description of distance sensor 326. In this way, the actuator 302, sensor 306, light source assemblies 308a, 308b, control unit 328, and distance sensors 326a, 326b were incorporated in the previously described embodiments and will not be described in further detail.

Apparatus 700 comprises first camera 304a and second camera 304b that are distributed around the circumference of the honeycomb body 100, and both cameras 304a, 304b are triggered based on measurement of travel by sensor 306. Otherwise, cameras 304a, 304b are constructed as previously described. In an embodiment, each camera captures images of the outer surface 110 at diametrically opposed locations on the honeycomb body 100. Each of first camera 304a and second camera 304b is configured to have a field of view having a length measured parallel to the axis of rotation of honeycomb body 100, such as the longitudinal axis L, that is greater than or equal to the length of the honeycomb body 100. As a result, the images can be combined by control unit 328 to create a composite image of the entire outer surface 110 after the honeycomb body 100 has made half of a full rotation about its longitudinal axis L. Similar to previous embodiments, the apparatus is configured so that the cameras and the honeycomb body 100 are able to move relative to each other in a direction substantially parallel to the optical axes OP of the cameras.

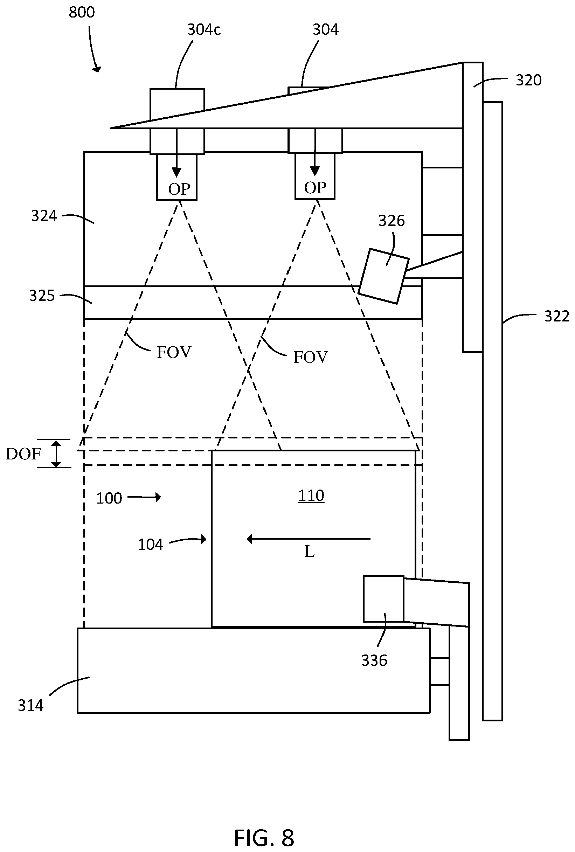

Referring now to FIG. 8, an apparatus 800 to inspect a honeycomb body 100 will be described. Apparatus 800 provides another configuration that can utilize a plurality of cameras to capture images of an outer surface 110 of a honeycomb body 100. An advantage of the configuration is that additional cameras can be incorporated to increase the length dimension IL of the inspection region 112 that can be imaged to accommodate honeycomb bodies having greater length. Apparatus 800 comprises actuator 302, first camera 304a, second camera 304b, sensor 306, and light source assembly 308. Apparatus 100 can also comprise distance sensor 326, and part presence sensor 336. The actuator 302, sensor 306, light source assembly 308, distance sensor 326, and part presence sensor 336 were incorporated in the previously describe embodiments and will not be described in further detail.

Apparatus 800 comprises first camera 304c and second camera 304d that are distributed parallel to the axis of rotation, and longitudinal axis L, of the honeycomb body 100, and both cameras 304c, 304d are triggered based on measurement of travel by sensor 306. Otherwise, cameras 304c, 304d are constructed as previously described. The first camera 304c and second camera 304d are configured to have a combined field of view having a length measured parallel to the axis of rotation that is greater than or equal to the length of the honeycomb body 100. As a result, the images can be combined by a control unit (e.g., control unit 328) to create a composite image of the entire outer surface 110 after the honeycomb body 100 has made a full rotation about its longitudinal axis L. Similar to previous embodiments, the apparatus is configured so that the cameras and honeycomb body 100 are able to move relative to each other in a direction substantially parallel to the optical axes OP of the cameras.

In an embodiment, such as using apparatus 300, 800, the entire outer surface 110 can be imaged by capturing images over a continuous full rotation of the honeycomb body 100. In an embodiment, such as using apparatus 700, the outer surface 110 can be imaged by capturing images over a continuous partial rotation of the honeycomb body 100. The amount of rotation can be predefined by a user, or the control unit can be configured to determine the required rotation based at least in part on dimensional attributes of the honeycomb body 100, such as outer diameter. The dimensional attributes can be entered by a user or measured using one or more of the sensors included in the apparatus. Additionally, the amount of rotation can be selected so that duplicative images are captured at the ends of the composite image to assure that the entire outer surface is imaged. In an embodiment, the apparatus is configured to base the rotation distance of a cylindrical honeycomb body 100 on the nominal diameter and adding a predefined tolerance to the distance, such as by increasing the distance by a predefined percentage. In an embodiment that predefined percentage is less than or equal to 10%, in an embodiment less than or equal to 5%, and in an embodiment less than or equal to 3%.

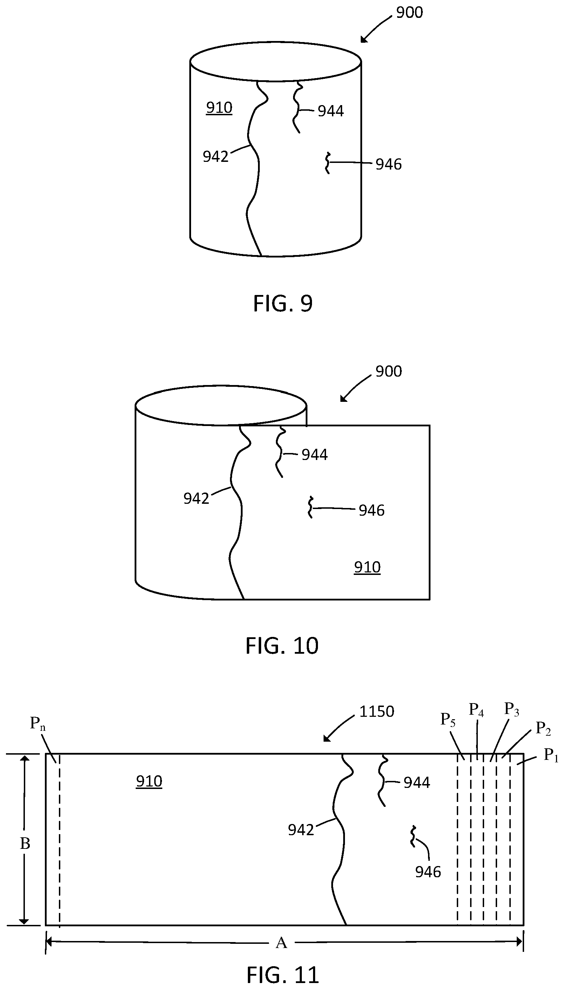

Referring now to FIGS. 9-11, a honeycomb body 900 having multiple defects will be described. As described above, honeycomb bodies can have a wide variety of surface defects including full fissures, partial fissures, oil fissures, and air checks. All but full fissures extend along only a portion of the length of the honeycomb body. For example, honeycomb body 900 is illustrated having a full fissure 902, a partial fissure 904, and an oil fissure 906. The embodiments of an apparatus to inspect a honeycomb body described herein provide imaging of the entire outer surface 910 of honeycomb body 900 by imaging inspection regions of the outer surface 910. Because the imaging is triggered based on measured circumferential travel of the outer surface 910, and because the field of view of the camera is selected to capture the entire length of the honeycomb body 900, there are no portions of the outer surface 910 absent from the images. As a result, defects that do not extend across the entire length of the honeycomb body 900 do not evade inspection.

A composite image 1150 is formed from a plurality of images P₁ - Pₙ taken of the honeycomb body 900 as it is rotated based on an inspection region covering sequential sections around the circumference of the honeycomb body 900. If one or more extra images (e.g., image Pₙ₊₁, Pₙ₊₂, etc.) are taken duplicatively of the same area as the first images (e.g., P₁, P₂, etc.) as described above, then the duplicative images can be discarded or otherwise not used in forming the composite image 1150. Effectively, the composite image 1150 is formed as if the outer skin were peeled from the honeycomb body 900, laid flat and imaged, as shown schematically in FIG. 10, so that the length A of the composite image 1150 corresponds to the circumferential length of the honeycomb body 900 and the height B corresponds to the overall length of the honeycomb body 900. The final composite image 1150 is formed by stitching together the plurality of images P in the same sequence that they were captured, so that the final composite image 1150 accurately displays the appearance of the entire outer surface 910 including any defects on the honeycomb body 900.

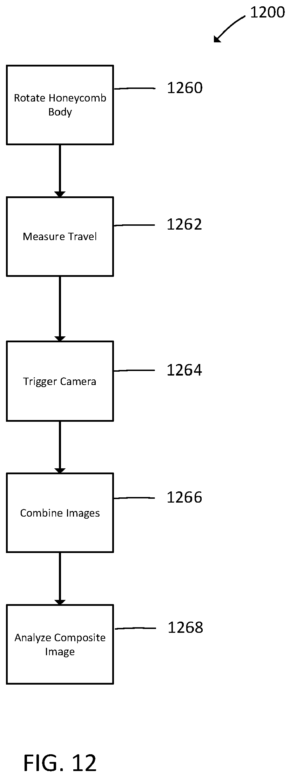

FIG. 12 depicts a flowchart 1200 of an example method of inspecting an outer surface of a honeycomb body. Flowchart 1200 can be performed using any of the embodiments of the inspection apparatuses 300, 700, and 800 shown in respective FIGS. 3, 7, and 8, for example. Further structural and operational embodiments will be apparent to persons skilled in the relevant art(s) based on the discussion regarding the flowchart 1200.

As shown in FIG. 12, the method of flowchart 1200 begins at step 1260. In step 1260, the honeycomb body (e.g., the honeycomb body 100) is rotated. In an embodiment, rotating the honeycomb body comprises rotating the honeycomb body continuously, such as through at least one full rotation. The honeycomb body can be rotated using an actuator, such as actuator 302.

At step 1262, the circumferential travel of an outer surface of the honeycomb body is measured. In an embodiment, measuring the circumferential travel at step 1262 comprises measuring the circumferential travel along a circumference of an outer surface of the honeycomb body. In an embodiment, sensor 306 is used to measure the circumferential travel.

At step 1264, a camera is triggered to collect a plurality of images. In an embodiment, triggering the camera in step 1264 comprises triggering the camera to collect a plurality of images of the outer surface of the honeycomb body. The plurality of images are collected at predetermined increments of circumferential travel of the outer surface over a single rotation of the honeycomb body. In an embodiment, the field of view of the camera captures a portion of the circumference of the honeycomb body matched to the amount of travel used to trigger the camera. In an embodiment, the camera 304 is used to collect the plurality of images.

At step 1266, the plurality of images are combined. Combining the plurality of images in step 1266 comprises combining the plurality of images into a composite image. In an embodiment, the composite image displays the entire outer surface of the honeycomb body. In an embodiment, the plurality of images are stitched together using control unit 328.

At step 1268, the composite image is analyzed. Analyzing the composite image in step 1268 comprises analyzing the composite image to identify one or more surface defects on the outer surface of the honeycomb body. In an embodiment, the control unit 328 is used to analyze the composite image. For example, the analyzing can be conducted by one or more algorithms, such as machine learning algorithms, image processing algorithms, etc., to detect whether an anomaly is present, and/or to classify the types of anomaly. For example, image processing algorithms such as thresholding can be utilized to assist in detection of constrastingly colored anomalies (e.g., dark anomalies on a light colored outer surface 110). In one embodiment, a deep learning algorithm, e.g., a neural network configured for image classification, such as ResNet, is utilized that can be trained in a supervised manner on images of passing and failing honeycombs, such that the neural network increasingly learns to detect which anomalies are rejectable defects in comparison to anomalies that are not rejectable defects. For example, hundreds or even thousands of images showing each different type of defect or anomaly, along with anomaly-free honeycomb bodies, can be provided to the algorithm to train the algorithm to recognize each scenario and thereby classify the honeycomb accordingly. Those of skill in the art will recognize other algorithms suitable for detection and classification of the honeycomb bodies based on the collected images.

The method can also comprise rejecting the honeycomb body based at least in part on a number of identified surface defects being above a predefined threshold. In an embodiment, the honeycomb body is rejected if the number of identified surface defects is greater than or equal to 10 defects, and in another embodiment greater than or equal to 5 defects. Still further, the method can comprise applying an indicium to a surface of the honeycomb body based at least in part on a pass/fail threshold, such as a number of surface defects. In an embodiment, the honeycomb body is marked as passing inspection if the number of identified surface defects is less than 10 defects, and in another embodiment less than 5 defects.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims.

## Claims

1. An apparatus (300) to inspect a honeycomb body (100), comprising:
an actuator (302) supporting the honeycomb body (100), the actuator (302) comprising a drive roller (310) configured to rotate the honeycomb body (100) continuously over at least a portion of a full rotation of the honeycomb body (100) about an axis of rotation;
a camera (304) having a field of view encompassing an inspection region (112) of an outer circumferential surface (110) of the honeycomb body (100);
a sensor (306) that directly measures circumferential travel along a circumference of the honeycomb body (100) when the honeycomb body (100) is rotated by the actuator (302), the sensor (306) configured to trigger the camera (304) to collect an image of the inspection region (112) of the honeycomb body (100) at a predetermined increment of the circumferential travel based on the direct measurements; and
a light source (324) having an illumination area that encompasses the inspection region (112) of the outer circumferential surface (110) of the honeycomb body (100),
wherein the sensor (306) is an encoder having a measurement resolution of less than or equal to 0.2 µm,
wherein the light source (324) has an intensity of at least one million lux,
wherein an angle (0) between an illumination axis (I) of the light source (324) and an optical axis (OP) of the camera (304) is less than or equal to 15°.

2. The apparatus of claim 1, wherein the light source (324) comprises a plurality of light sources (324) and the angle (0) between the illumination axis (I) of each of the plurality of light sources (324) and the optical axis (OP) of the camera (304) is less than or equal to 15°.

3. The apparatus of claim 2, wherein the plurality of light sources has a combined intensity of at least two million lux.

4. The apparatus of any one of claims 1-3, wherein the camera comprises a plurality of cameras (304).

5. The apparatus of claim 4, wherein the plurality of cameras (304) is distributed around the circumference of the honeycomb body (100), the field of view of each of the cameras (304) comprises a length measured parallel to the axis of rotation that is greater than or equal to a full length of the honeycomb body.

6. The apparatus of claim 5, wherein the plurality of cameras is distributed parallel to the axis of rotation, the plurality of cameras (304) having a combined field of view having a combined length measured parallel to the axis of rotation that is greater than or equal to a full length of the honeycomb body (100).

7. The apparatus of any one of claims 1-5, wherein the field of view comprises a length measured parallel to the axis of rotation that is greater than or equal to a full length of the honeycomb body (100) measured parallel to the axis of rotation.

8. The apparatus of any one of claims 1-7, further comprising a distance sensor (326) configured to determine a distance between the camera (304) and the honeycomb body (100) in a direction parallel to an optical axis (OP) of the camera (304).

9. The apparatus of any one of claims 1-8, further comprising a control unit (328) configured to analyze the image to identify one or more surface defects.

10. The apparatus of claim 9, further comprising a rejection actuator configured to move the honeycomb body to a rejection receptacle based at least in part on a number of identified surface defects being greater than or equal to a predefined threshold.

11. The apparatus of claim 9, further comprising a marking device (334) configured to apply an indicium to a surface of the honeycomb body (100) based at least in part on a number of identified surface defects being less than a predefined threshold.

12. The apparatus of any one of claims 1-11 wherein the actuator (302) is spaced from a portion of an intersection between an end face of the honeycomb body (100) and the outer circumferential surface (110) of the honeycomb body (100) in the inspection region (112).

13. The apparatus of claim 1, wherein the actuator (302) is configured to engage and support the outer circumferential surface (110) of the honeycomb body (100).

14. A method of inspecting an outer circumferential surface (110) of a honeycomb body, (100) comprising:
continuously rotating the honeycomb body (100) via an actuator (302) comprising a drive roller (310) engaged with the outer circumferential surface (110) of the honeycomb body (100);
directly measuring circumferential travel along a circumference of the outer circumferential surface (110) of the honeycomb body (100);
triggering, based on the direct measurements, a camera (304) to collect a plurality of images of the outer circumferential surface (110) of the honeycomb body (100), the plurality of images collected at predetermined increments of the circumferential travel of the outer circumferential surface (110) over a single rotation of the honeycomb body (100);
combining the plurality of images into a composite image; and
analyzing the composite image to identify one or more surface defects on the outer circumferential surface (110) of the honeycomb body (100),
wherein a sensor (306) directly measures the circumferential travel with a resolution of less than or equal to 0.2 µm,
wherein a light source assembly (308) is configured emitted light and to direct the light onto the outer surface (110) of the honeycomb body (100), wherein the emitted light forms an illumination area on the outer surface (110) that encompasses the inspection region (112) so that an inspection region (112) is illuminated during image capture by camera (304), wherein the light source assembly (308) comprises at least one light source (324), wherein the light source (324) has an intensity of at least one million lux.

## Patentansprüche

1. Vorrichtung (300) zum Prüfen eines Wabenkörpers (100), die Folgendes umfasst:
einen Aktuator (302), der den Wabenkörper (100) trägt, wobei der Aktuator (302) eine Antriebsrolle (310) umfasst, die konfiguriert ist, den Wabenkörper (100) über wenigstens einen Teil einer vollständigen Drehung des Wabenkörpers (100) um eine Drehachse kontinuierlich zu drehen;
eine Kamera (304) mit einem Sehfeld, das einen Prüfbereich (112) einer äußeren Umfangsfläche (110) des Wabenkörpers (100) einschließt;
einen Sensor (306), der die Umfangsbewegung entlang eines Umfangs des Wabenkörpers (100) direkt misst, wenn der Wabenkörper (100) durch den Aktuator (302) gedreht wird, wobei der Sensor (306) konfiguriert ist, die Kamera (304) auszulösen, um ein Bild des Prüfbereichs (112) des Wabenkörpers (100) bei einem vorgegebenen Inkrement der Umfangsbewegung basierend auf den direkten Messungen zu sammeln; und
eine Lichtquelle (324) mit einer Beleuchtungsfläche, die den Prüfbereich (112) der äußeren Umfangsfläche (110) des Wabenkörpers (100) einschließt,
wobei der Sensor (306) ein Codierer mit einer Messauflösung von kleiner als oder gleich 0,2 µm ist,
wobei die Lichtquelle (324) eine Intensität von wenigstens einer Million Lux aufweist,
wobei ein Winkel (θ) zwischen einer Beleuchtungsachse (I) der Lichtquelle (324) und einer optischen Achse (OP) der Kamera (304) kleiner als oder gleich 15 ist.

2. Vorrichtung nach Anspruch 1, wobei die Lichtquelle (324) mehrere Lichtquellen (324) umfasst und der Winkel (θ) zwischen der Beleuchtungsachse (I) jeder der mehreren Lichtquellen (324) und der optischen Achse (OP) der Kamera (304) kleiner als oder gleich 15 ist.

3. Vorrichtung nach Anspruch 2, wobei die mehreren Lichtquellen eine kombinierte Intensität von wenigstens zwei Millionen Lux aufweisen.

4. Vorrichtung nach einem der Ansprüche 1-3, wobei die Kamera mehrere Kameras (304) umfasst.

5. Vorrichtung nach Anspruch 4, wobei die mehreren Kameras (304) um den Umfang des Wabenkörpers (100) verteilt sind, wobei das Sehfeld jeder der Kameras (304) eine parallel zu der Drehachse gemessene Länge umfasst, die größer als eine oder gleich einer vollen Länge des Wabenkörpers ist.

6. Vorrichtung nach Anspruch 5, wobei die mehreren Kameras parallel zu der Drehachse verteilt sind, wobei die mehreren Kameras (304) ein kombiniertes Sehfeld mit einer parallel zu der Drehachse gemessenen kombinierten Länge aufweisen, die größer als eine oder gleich einer vollen Länge des Wabenkörpers (100) ist.

7. Vorrichtung nach einem der Ansprüche 1-5, wobei das Sehfeld eine parallel zu der Drehachse gemessene Länge umfasst, die größer als eine oder gleich einer parallel zu der Drehachse gemessenen vollen Länge des Wabenkörpers (100) ist.

8. Vorrichtung nach einem der Ansprüche 1-7, die ferner einen Abstandssensor (326) umfasst, der konfiguriert ist, einen Abstand zwischen der Kamera (304) und dem Wabenkörper (100) in einer Richtung parallel zu einer optischen Achse (OP) der Kamera (304) zu bestimmen.

9. Vorrichtung nach einem der Ansprüche 1-8, die ferner eine Steuereinheit (328) umfasst, die konfiguriert ist, das Bild zu analysieren, um einen oder mehrere Oberflächenfehler zu identifizieren.

10. Vorrichtung nach Anspruch 9, die ferner einen Zurückweisungsaktuator umfasst, der konfiguriert ist, wenigstens teilweise darauf basierend, dass eine Anzahl der identifizierten Oberflächenfehler größer als ein oder gleich einem vorgegebenen Schwellenwert ist, den Wabenkörper zu einer Zurückweisungsaufnahme zu bewegen.

11. Vorrichtung nach Anspruch 9, die ferner eine Markierungsvorrichtung (334) umfasst, die konfiguriert ist, wenigstens teilweise darauf basierend, dass eine Anzahl der identifizierten Oberflächenfehler kleiner als ein vorgegebener Schwellenwert ist, ein Zeichen auf einer Oberfläche des Wabenkörpers (100) aufzubringen.

12. Vorrichtung nach einem der Ansprüche 1-11, wobei der Aktuator (302) von einem Abschnitt einer Schnittfläche zwischen einer Stirnfläche des Wabenkörpers (100) und der äußeren Umfangsfläche (110) des Wabenkörpers (100) in dem Prüfbereich (112) beabstandet ist.

13. Vorrichtung nach Anspruch 1, wobei der Aktuator (302) konfiguriert ist, in die äußere Umfangsfläche (110) des Wabenkörpers (100) einzugreifen und diese zu tragen.

14. Verfahren zum Prüfen einer äußeren Umfangsfläche (110) eines Wabenkörpers (100), das Folgendes umfasst:
kontinuierliches Drehen des Wabenkörpers (100) über einen Aktuator (302), der eine Antriebsrolle (310) umfasst, die sich mit der äußeren Umfangsfläche (110) des Wabenkörpers (100) in Eingriff befindet;
direktes Messen der Umfangsbewegung entlang eines Umfangs der äußeren Umfangsfläche (110) des Wabenkörpers (100);
Auslösen, basierend auf den direkten Messungen, einer Kamera (304), um mehrere Bilder der äußeren Umfangsfläche (110) des Wabenkörpers (100) zu sammeln, wobei die mehreren Bilder in vorgegebenen Inkrementen der Umfangsbewegung der äußeren Umfangsfläche (110) über eine einzige Drehung des Wabenkörpers (100) gesammelt werden;
Kombinieren der mehreren Bilder zu einem zusammengesetzten Bild; und
Analysieren des zusammengesetzten Bildes, um einen oder mehrere Oberflächenfehler auf der äußeren Umfangsfläche (110) des Wabenkörpers (100) zu identifizieren,
wobei ein Sensor (306) die Umfangsbewegung mit einer Auflösung von kleiner als oder gleich 0,2 µm direkt misst,
wobei eine Lichtquellenanordnung (308) konfiguriert ist, Licht zu emittieren und das Licht auf die Außenfläche (110) des Wabenkörpers (100) zu richten, wobei das emittierte Licht einen Beleuchtungsbereich auf der Außenfläche (110) bildet, der den Prüfbereich (112) einschließt, so dass ein Prüfbereich (112) während der Bilderfassung durch die Kamera (304) beleuchtet wird, wobei die Lichtquellenanordnung (308) wenigstens eine Lichtquelle (324) umfasst, wobei die Lichtquelle (324) eine Intensität von wenigstens einer Million Lux aufweist.

## Revendications

1. Appareil d'inspection (300) d'un corps en nid d'abeilles (100), comprenant :
un actionneur (302) supportant le corps en nid d'abeilles (100), l'actionneur (302) comprenant un rouleau d'entraînement (310) configuré pour mettre en rotation le corps en nid d'abeilles (100) de manière continue sur au moins une partie d'une rotation complète du corps en nid d'abeilles (100) autour d'un axe de rotation ;
une caméra (304) ayant un champ de vision englobant une région d'inspection (112) d'une surface circonférentielle extérieure (110) du corps en nid d'abeilles (100) ;
un capteur (306) qui mesure directement le déplacement circonférentiel le long d'une circonférence du corps en nid d'abeilles (100) lorsque le corps en nid d'abeilles (100) est mis en rotation par l'actionneur (302), le capteur (306) étant configuré pour déclencher la caméra (304) afin de recueillir une image de la région d'inspection (112) du corps en nid d'abeilles (100) à un incrément prédéterminé du déplacement circonférentiel sur la base des mesures directes ; et
une source de lumière (324) ayant une zone d'éclairage qui englobe la région d'inspection (112) de la surface circonférentielle extérieure (110) du corps en nid d'abeilles (100),
le capteur (306) étant un encodeur ayant une résolution de mesure inférieure ou égale à 0,2 µm,
la source de lumière (324) ayant une intensité d'au moins un million de lux,
un angle (θ) entre un axe d'éclairage (I) de la source de lumière (324) et un axe optique (OP) de la caméra (304) étant inférieur ou égal à 15°.

2. Appareil selon la revendication 1, la source de lumière (324) comprenant une pluralité de sources de lumière (324), et l'angle (θ) entre l'axe d'éclairage (I) de chacune de la pluralité de sources de lumière (324) et l'axe optique (OP) de la caméra (304) étant inférieur ou égal à 15°.

3. Appareil selon la revendication 2, la pluralité de sources de lumière ayant une intensité combinée d'au moins deux millions de lux.

4. Appareil selon l'une quelconque des revendications 1 à 3, la caméra comprenant une pluralité de caméras (304).

5. Appareil selon la revendication 4, la pluralité de caméras (304) étant répartie autour de la circonférence du corps en nid d'abeilles (100), le champ de vision de chacune des caméras (304) comprenant une longueur mesurée parallèlement à l'axe de rotation qui est supérieure ou égale à une longueur totale du corps en nid d'abeilles.

6. Appareil selon la revendication 5, la pluralité de caméras étant répartie parallèlement à l'axe de rotation, la pluralité de caméras (304) ayant un champ de vision combiné ayant une longueur combinée mesurée parallèlement à l'axe de rotation qui est supérieure ou égale à une longueur totale du corps en nid d'abeilles (100).

7. Appareil selon l'une quelconque des revendications 1 à 5, le champ de vision comprenant une longueur mesurée parallèlement à l'axe de rotation qui est supérieure ou égale à une longueur totale du corps en nid d'abeilles (100) mesurée parallèlement à l'axe de rotation.

8. Appareil selon l'une quelconque des revendications 1 à 7, comprenant en outre un capteur de distance (326) configuré pour déterminer une distance entre la caméra (304) et le corps en nid d'abeilles (100) dans une direction parallèle à un axe optique (OP) de la caméra (304).

9. Appareil selon l'une quelconque des revendications 1 à 8, comprenant en outre une unité de commande (328) configurée pour analyser l'image afin d'identifier un ou plusieurs défauts de surface.

10. Appareil selon la revendication 9, comprenant en outre un actionneur de rejet configuré pour déplacer le corps en nid d'abeilles vers un réceptacle de rejet sur la base au moins en partie d'un nombre de défauts de surface identifiés supérieur ou égal à un seuil prédéfini.

11. Appareil selon la revendication 9, comprenant en outre un dispositif de marquage (334) configuré pour appliquer une marque à une surface du corps en nid d'abeilles (100) sur la base au moins en partie d'un nombre de défauts de surface identifiés inférieur à un seuil prédéfini.

12. Appareil selon l'une quelconque des revendications 1 à 11, l'actionneur (302) étant espacé d'une partie d'une intersection entre une face d'extrémité du corps en nid d'abeilles (100) et la surface circonférentielle extérieure (110) du corps en nid d'abeilles (100) dans la région d'inspection (112).

13. Appareil selon la revendication 1, l'actionneur (302) étant configuré pour venir en prise avec et pour supporter la surface circonférentielle extérieure (110) du corps en nid d'abeilles (100).

14. Procédé d'inspection d'une surface circonférentielle extérieure (110) d'un corps en nid d'abeilles (100), comprenant :
la mise en rotation continue du corps en nid d'abeilles (100) par l'intermédiaire d'un actionneur (302) comprenant un rouleau d'entraînement (310) en prise avec la surface circonférentielle extérieure (110) du corps en nid d'abeilles (100) ;
la mesure directe d'un déplacement circonférentiel le long d'une circonférence de la surface circonférentielle extérieure (110) du corps en nid d'abeilles (100) ;
le déclenchement, sur la base des mesures directes, d'une caméra (304) pour recueillir une pluralité d'images de la surface circonférentielle extérieure (110) du corps en nid d'abeilles (100), la pluralité d'images recueillies à des incréments prédéterminés du déplacement circonférentiel de la surface circonférentielle extérieure (110) sur une seule rotation du corps en nid d'abeilles (100) ;
la combinaison de la pluralité d'images en une image composite ; et
l'analyse de l'image composite pour identifier un ou plusieurs défauts de surface sur la surface circonférentielle extérieure (110) du corps en nid d'abeilles (100),
un capteur (306) mesurant directement le déplacement circonférentiel avec une résolution inférieure ou égale à 0,2 µm,
un ensemble formant source de lumière (308) étant configuré pour émettre de la lumière et pour diriger la lumière sur la surface extérieure (110) du corps en nid d'abeilles (100), la lumière émise formant une zone d'éclairage sur la surface extérieure (110) qui englobe la région d'inspection (112), de sorte qu'une région d'inspection (112) est éclairée pendant la capture d'image par la caméra (304), l'ensemble formant source de lumière (308) comprenant au moins une source de lumière (324), la source de lumière (324) ayant une intensité d'au moins un million de lux.
